# EUROPÄISCHE PATENTSCHRIFT

(11) **EP 1 145 113 B1**
(45) Veröffentlichungstag und Bekanntmachung des Hinweises auf die Patenterteilung: **01.03.2006**
(21) Anmeldenummer: 99963284.7
(22) Anmeldetag: 21.12.1999
(51) Int. Cl.: G06F 9/318, G06F 9/38, H03M 7/30

(54) **VERFAHREN UND ANORDNUNG ZUR ERZEUGUNG UND AUSFÜHRUNG VON KOMPRIMIERTEN PROGRAMMEN EINES VLIW-PROZESSORS**
DEVICE AND METHOD FOR GENERATING AND EXECUTING COMPRESSED PROGRAMS OF A VERY LONG INSTRUCTION WORD PROCESSOR
PROCEDE ET DISPOSITIF PERMETTANT DE PRODUIRE ET D'EXECUTER LES PROGRAMMES COMPRIMES D'UN PROCESSEUR A TRES LONG MOT INSTRUCTION

(30) Priorität: 22.12.1998 DE 19859389
(43) Veröffentlichungstag der Anmeldung: 17.10.2001
(73) Patentinhaber: Systemonic AG, 01099 Dresden (DE)
(72) Erfinder: WEISS, Matthias, 01099 Dresden (DE)
(74) Vertreter: Adler, Peter
(86) Internationale Anmeldenummer: PCT/DE1999/004050
(87) Internationale Veröffentlichungsnummer: WO 2000/038049

(56) Entgegenhaltungen:
- EP-A- 0 375 221
- EP-A- 0 546 863
- US-A- 5 819 058
- LEFURGY C ET AL: "IMPROVING CODE DENSITY USING COMPRESSION TECHNIQUES" PROCEEDINGS OF THE ANNUAL INTERNATIONAL SYMPOSIUM ON MICROARCHITEC TURE,US,LOS ALAMITOS, CA: IEEE COMPUTER SOC, Bd. 30TH CONF, 1997, Seiten 194-203, XP000764788 ISBN: 0-8186-7977-8 in der Anmeldung erwähnt

## Beschreibung

Die Erfindung betrifft ein Verfahren zur Ansteuerung von Funktionseinheiten in einem Prozessor, bei dem in einer Konfiguration eine aus einer Übersetzung eines Programmcodes stammende Folge von Primärinstruktionsworten aus mehreren Instruktionswortteilen komprimiert und als Folge von zugehörigen Programmworten gespeichert wird. Dabei werden in einer nachfolgenden Ausführungsphase aus der Folge von Programmworten aufeinanderfolgende Sekundärinstruktionsworte aus mehreren Instruktionswortteilen in der zur Ansteuerung aller Funktionseinheiten benötigten vollen Instruktionswortbreite erzeugt.

Die Erfindung betrifft auch eine Prozessoranordnung zur Durchführung des Verfahrens mit einem Programmspeicher zur Speicherung von Programmworten, Funktionseinheiten, einem diesen Funktionseinheiten zugeordneten Instruktionswortspeicher zur Speicherung eines auf den Funktionseinheiten abzuarbeitenden Sekundärinstruktionswortes, einem Instruktionswortpuffer zur Speicherung bereits erzeugter Sekundärinstruktionsworte mit einer Breite, die mindestens gleich der Bitbreite des Sekundärinstruktionswortes ist und mit Mitteln zur Erzeugung eines abzuarbeitenden Sekundärinstruktionswortes aus einem oder mehreren Programmworten und einem in dem Instruktionswortpuffer gespeicherten Sekundärinstruktionswort.

Prozessoranordnungen der eingangs genannten Art beinhalten Funktionseinheiten, die parallel zueinander arbeiten und die zu jedem Takt von einem Sekundärinstruktionswort angesteuert werden. Das jeweilige Sekundärinstruktionswort wird aus einem Programmwort gewonnen, das einem Programmspeicher entnommen wird.

Die Sekundärinstruktionsworte ihrerseits bestehen aus mehreren Instruktionswortteilen, wobei je ein Instruktionswortteil der Ansteuerung je einer Funktionseinheit dient.

Zur Erhöhung der Leistungsfähigkeit von Prozessoranordnungen besteht das Bestreben nach einer Vergrößerung der Verarbeitungsbreite, was eine Erhöhung der Anzahl von Funktionseinheiten erforderlich werden läßt. Damit vergrößert sich im allgemeinen die Bitbreite der Sekundärinstruktionsworte und damit auch der Programmworte. Dies hat eine Bereitstellung eines entsprechenden Speicherplatzes im Programmspeicher zur Folge, der der wesentliche Flächenteile auf dem Halbleiterchip einnimmt.

Da die Größe der Programmworte die Größe des Programmspeichers bestimmen, ist es das Bestreben, die Größe der Programmworte zu verringern, um eine Verringerung des Speicherplatzbedarfes zu erreichen. Hierfür sind mehrere Komprimierungsverfahren bekannt. Das naheliegendste Verfahren ist in dem Bericht von Weiss M., Fettweis, G. "Dynamic Codewidth Reduction for VLIW Instruction Set Architectures in Digital Signal Processors" (Tagungsbericht des 3. Int. Workshop on Signal an Image Processing IWSIP 96 S. 517 bis 520) beschrieben. Darin werden die Programmworte aus hintereinanderliegenden Primärinstruktionsworten so zusammengestellt, dass anschließend daraus wieder Sekundärinstruktionsworte erstellt werden können, indem ein einmal erzeugtes Sekundärinstruktionswort (VLIW) in einen Instruktionswortspeicher geschrieben wird und zur Erzeugung des nächsten Sekundärinstruktionswortes bei dem gespeicherten Sekundärinstruktionswort nur die Instruktionswortteile ausgetauscht werden, die sich von dem gespeicherten Sekundärinstruktionswort zu dem zu erzeugenden Sekundärinstruktionswort unterscheiden. Mithin braucht in dem Programmwort nur die Information enthalten zu sein, welches Instruktionswortteil sich unterscheidet und mit welchem Inhalt es sich unterscheidet. Damit ist es möglich, die Programmworte sehr schmal zu gestalten und damit Speicherplatz zu sparen.

Bei größeren Unterschieden zwischen dem gespeicherten und dem herzustellenden Sekundärinstruktionswort ist allerdings die Breite des Programmwortes zu vergrößern, wenn diese größeren Unterschiede häufig auftreten, was den Nachteil eines größeren Speicherplatzes mit sich bringt, oder die Unterschiede sind über mehrere Programmwörter zu verteilen. Damit ist das Sekundärinstruktionswort aus mehreren Programmworten über mehrere Takte herzustellen. Daraus entsteht der Nachteil eines größeren Zeitaufwandes.

Der Erfindung liegt damit die Aufgabe zugrunde, unter Beibehaltung einer geringen Programmwortbreite die Arbeitsgeschwindigkeit anwendungsspezifisch zu erhöhen.

Verfahrensseitig wird die Aufgabe dadurch gelöst, daß im Ergebnis der Konfiguration ein Programmwort ein erstes Kennzeichen eines Primärinstruktionswortes aus einer ersten Gruppe vorhergehender Primärinstruktionsworte, welches mit dem zum Programmwort zugehörigen Primärinstruktionswort die größte Übereinstimmung aufweist, und Instruktionswortteile, die das zu dem Programmwort gehörige Primärinstruktionswort von dem zu dem Kennzeichen gehörigen Primärinstruktionswort unterscheidenden, enthält. In der Ausführungsphase wird eine der ersten Gruppe in der Anzahl entsprechende zweite Gruppe von Sekundärinstruktionsworten mit je einer zweiten Kennzeichnung versehen gespeichert. Mittels dem in dem Programmwort enthaltenen ersten Kennzeichen wird ein dem zugehörigen Primärinstruktionswort entsprechendes Sekundärinstruktionswort aus der zweiten Gruppe über das zugehörige zweite Kennzeichen ermittelt wird und das dem Programmwort entsprechende Sekundärinstruktionswort erzeugt, indem in dem Sekundärinstruktionswort aus der zweiten Gruppe die in dem Programmwort enthaltenen Instruktionswortteile ausgetauscht werden.

Bereits bei der Konfigurationsphase können die Programmworte so aufgebaut werden, daß sie nur die geringstmögliche Information zur späteren Erzeugung eines Sekundärinstruktionswortes in der Ausführungsphase beinhalten. Dies wird damit erreicht, daß auf die vorhergehenden Primärinstruktionswörter zurückgegriffen wird, die die größte Übereinstimmung mit dem zu konfigurierenden Primärinstruktionswort aufweisen. Da in der Ausführungsphase die Sekundärinstruktiomswörter in der gleichen Breite und in der gleichen Reihenfolge wie die Primärinstruktionswörter erzeugt werden sollen, wird in der Ausführungsphase praktisch in umgekehrter Reihenfolge zur der Konfigurationsphase verfahren und jeweils ein bereits erzeugtes Sekundärinstruktionswort, welches dem Primärinstruktionswort entspricht, das in der Konfigurationsphase einem aktuellen Primärinstruktionswort am ähnlichsten ist, zur Erzeugung eines neuen Sekundärinstruktionswortes verwendet. Da stets auf das Sekundärinstruktionswort mit der größten Ähnlichkeit oder der größten Übereinstimmung zurückgegriffen wird, läßt sich die Menge der zur Erzeugung eines neuen Sekundärinstruktionswortes erforderliche Information so klein wie möglich halten. Damit kann der Speicherbedarf eines Programmspeichers minimiert werden.

In einer Ausführungsform des Verfahrens ist vorgesehen, dass die erste Gruppe aus einer ersten Anzahl der dem jeweiligen Primärinstruktionswort direkt vorausgehenden Primärinstruktionswörtern besteht. Die zweite Gruppe besteht aus einer zweiten Anzahl von Sekundärinstruktionswörtern, die mindestens gleich der ersten Anzahl ist, wobei jedes Sekundärinstruktionswort vor der Erzeugung des nächstfolgenden Sekundärinstruktionswortes der Gruppe als letztes hinzugefügt und das über die zweite Anzahl hinausgehende zuerst hinzugefügte Sekundärinstruktionswort aus der zweiten Gruppe entfernt wird. Damit besteht die Gruppe stets aus den unmittelbar vorhergehenden Sekundärinstruktionswörtern, wovon eines eine größtmögliche Ähnlichkeit aufweist, wenn sich die Sekundärinstruktionswörter innerhalb einer Gruppe inhaltlich unterscheiden.

Eine andere Möglichkeit der Ausgestaltung des Verfahrens besteht darin, daß das neu erzeugte Sekundärinstruktionswort der zweiten Gruppe hinzugefügt wird, indem dieses anstelle des seiner Erzeugung dienenden Sekundärinstruktionswortes gespeichert wird.

Mit dieser Variante des Verfahrens wird es ausgeschlossen, daß sich die Gruppe mit inhaltsgleichen Sekundärinstruktionswörtern beim mehrmaligen Durchlaufen ein und derselben Funktion anfüllt.

Eine andere Möglichkeit besteht darin, dass ein dem Programmwort entsprechendes neu erzeugtes Sekundärinstruktionswort nach seiner Erzeugung nicht gespeichert wird. Dabei wird bei jeder Erzeugung eines Sekundärinstruktionswortes stets auf den gleichen Vorrat von einmal erzeugten Instruktionswörtern zurückgegriffen, was günstig ist, wenn diese gespeicherten Instruktionswörter als Musterwörter für die Erzeugung anderer Sekundärinstruktionswörter geeignet sind, dabei hierbei Speichervorgänge vermieden werden können.

In einer Ausgestaltung des Verfahrens ist vorgesehen, daß das erste Kennzeichen als Abstand des zum jeweiligen Programmwort gehörigen Primärinstruktionswortes zu dem Primärinstruktionswort mit der größten Übereinstimmung gebildet wird.

Eine weitere Ausgestaltung des Verfahrens sieht vor, daß das zweite Kennzeichen aus einer dem ersten Kennzeichen entsprechenden Adresse eines vorhergehenden Sekundärinstruktionswortes in einem der Abspeicherung der zweiten Gruppe dienenden Speicher besteht.

Diese beiden Ausgestaltungen zeigen eine besonders einfache Erzeugung von Merkmalen.

Eine Reduzierung der Programmwortbreite und damit verbunden eine Verringerung der Breite des Programmspeichers kann dadurch erreicht werden, daß das Programmwort aus einer Anzahl von Instruktionswortteilen besteht, die der innerhalb der Konfiguration am häufigsten auftretenden Anzahl zu unterscheidender Instruktionswortteile entspricht und daß zur Zusammensetzung von Sekundärinstruktionsworten, die zu dem der Erzeugung dienenden Sekundärinstruktionswort mehr als die in einem Programmwort abgelegte Anzahl von Instruktionswortteilen benötigt, mehrere Programmwörter verwendet werden. Somit genügt die Breite des Programmspeichers den häufigsten Anwendungsfällen, wobei auch keine Verzögerung in der Erstellung des Sekundärinstruktionswortes eintritt. Lediglich in den relativ wenigen Fällen, in denen die Anzahl der zu ändernden Instruktionswortteile die Breite eines Programmwortes überschreitet, werden zwei oder mehr Programmworte in zwei oder mehr Takten zur Herstellung des Sekundärinstruktionswortes benötigt.

Eine weitere Verringerung der Programmwortbreite kann dadurch erreicht werden, daß die Instruktionswortteile in einem Programmwort komprimiert werden. Dies geschieht dadurch, daß die Bitbreite in dem Maße verringert wird, wie eine Darstellung der am häufigsten vorkommenden Instruktionswortteile möglich ist, und daß bei einem Auftreten von Instruktionswortteilen, die zur Darstellung eine größere Bitbreite benötigen, mehrere Programmwörter verwendet werden.

Für eine derartige Komprimierung des Programmwortes ist es insbesondere zweckmäßig, daß die Breite der Instruktionswortteile in dem Programmwort halbiert wird und zur Darstellung der Instruktionswortteile ein oder zwei Programmwörter vorgesehen sind. Hat beispielsweise normalerweise das Programmwort eine Breite von 8 Bit, so stehen 256 Kombinationen zur Verfügung. Ein großer Teil dieser Kombinationen wird jedoch nur äußerst selten oder gar nicht benötigt. Dementsprechend kann das Programmwort mit einer Breite von 4 Bit vorgesehen werden, was für die 16 häufigsten Kombinationen zur Darstellung ausreichend ist. Soll eine andere als eine dieser Kombination dargestellt werden, werden hierfür zwei oder mehr Programmworte verwendet. Da dies jedoch nur sehr selten auftritt, ist die erreichte Einsparung an Speicherplatz für den Programmspeicher größer als der mögliche Zeitaufwand zur Erzeugung seltener Kombinationen.

Die Aufgabenstellung wird erfindungsgemäß auch durch eine Prozessoranordnung gelöst, die dadurch gekennzeichnet ist, daß der Instruktionswortpuffer aus einem zeilenweise adressierbaren Speicher Zugriff besteht. Im Unterschied zu dem dargestellten Stand der Technik besteht damit die Möglichkeit, direkt auf verschiedene abgespeicherte Sekundärinstruktionsworte zur Herstellung eines neuen Sekundärinstruktionswortes zurückzugreifen. Damit muß nicht irgendein gespeichertes Sekundärinstruktionswort der Erzeugung eines neuen Sekundärinstruktionswortes dienen, sondern es kann dasjenige abgespeicherte Sekundärinstruktionswort verwendet werden, das mit dem zu erzeugenden Sekundärinstruktionswort die größte Übereinstimmung aufweist. Damit ist der Änderungsaufwand relativ klein, was nur eine geringe Bitbreite des Programmwortes und damit einen kleinen Programmspeicher erfordert.

Die Erfindung soll nachfolgend anhand eines Ausführungsbeispieles näher erläutert werden. In den zugehörigen Zeichnungen zeigt
- Fig. 1: ein Ablaufschema des erfindungsgemäßen Verfahrens und

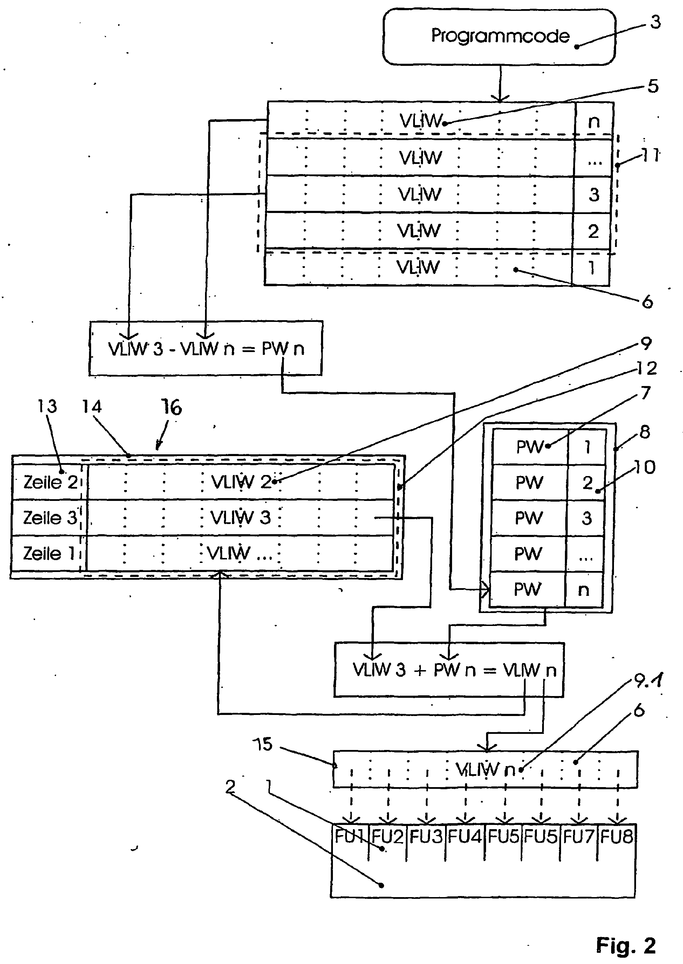

- Fig. 2: das Prinzip der erfindungsgemäßen Erzeugung der Primär- und Sekundärinstruktionsworte

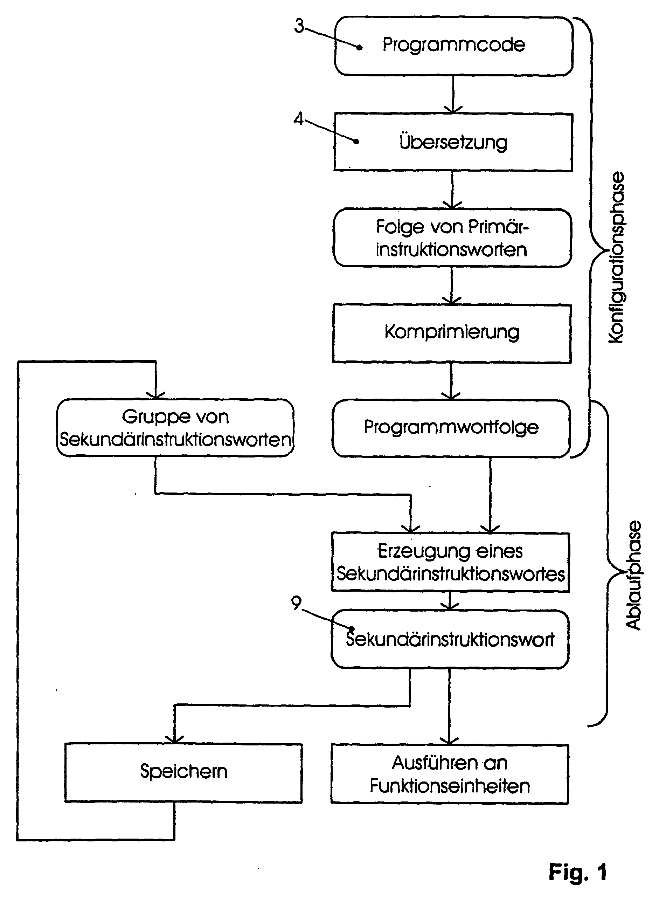

Bei dem in Fig. 1 dargestellten Verfahren zur Ansteuerung von Funktionseinheiten 1 in einem Prozessor 2 wird aus einem Programmcode 3 mittels einer Übersetzung 4 in einer Konfigurationsphase eine Folge von Primärinstruktionsworten 5 aus mehreren Instruktionswortteilen 6 erzeugt. Diese Folge von Primärinstruktionsworten 5 wird komprimiert und als Folge von zugehörigen Programmworten 7 in einem Programmspeicher 8 gespeichert.

Die Programmworte 7 bestehen aus einer Anzahl von Instruktionswortteilen 6, die der innerhalb der Konfiguration am häufigsten auftretenden Anzahl zu unterscheidender Instruktionswortteile 6 entspricht. Zur Zusammensetzung von Sekundärinstruktionsworten 9.1 können mehr als die in einem Programmwort 7 abgelegte Anzahl von Instruktionswortteilen 6 benötigt werden. Dazu werden dann mehrere Programmwörter 7 verwendet.

In einer nachfolgenden Ausführungsphase werden aus der Folge von Programmworten 7 aufeinanderfolgende Sekundärinstruktionsworte 9.1 aus mehreren Instruktionswortteilen 6 in der zur Ansteuerung aller Funktionseinheiten 1 benötigten vollen Instruktionswortbreite erzeugt.

Im Ergebnis der Konfiguration weist ein Programmwort 7 ein erstes Kennzeichen 10 eines Primärinstruktionswortes 5 aus einer ersten Gruppe 11 vorhergehender Primärinstruktionsworte 5, welches mit dem zum Programmwort 7 zugehörigen Primärinstruktionswort 5 die größte Übereinstimmung aufweist, und Instruktionswortteile 6 auf, die das zu dem Programmwort 7 gehörige Primärinstruktionswort 5 von dem zu dem Kennzeichen gehörigen Primärinstruktionswort 5 unterscheidenden, enthält. Das erste Kennzeichen 10 wird als Abstand des zum jeweiligen Programmwort 7 gehörigen Primärinstruktionswortes 5 zu dem Primärinstruktionswort 5 mit der größten Übereinstimmung gebildet.

In der Ausführungsphase wird eine der ersten Gruppe 11 in der Anzahl entsprechende zweite Gruppe 12 von Sekundärinstruktionsworten 9 mit je einem zweiten Kennzeichen 13 versehen gespeichert. Das zweite Kennzeichen 13 wird aus einer Zeilennummer eines der Abspeicherung der zweiten Gruppe 12 dienenden Instruktionswortpuffers 16 in Form eines Speichers 14 gebildet.

Mittels dem, in dem Programmwort 7 enthaltenen, ersten Kennzeichen 10 wird ein dem zugehörigen Primärinstruktionswort 5 entsprechendes Sekundärinstruktionswort 9 aus der zweiten Gruppe 12 über das zugehörige zweite Kennzeichen 13 ermittelt. Das dem Programmwort entsprechende Sekundärinstruktionswort 9.1 wird erzeugt, indem in dem Sekundärinstruktionswort 9 aus der zweiten Gruppe 12 die in dem Programmwort 7 enthaltenen Instruktionswortteile 6 ausgetauscht werden.

Die erste Gruppe 11 besteht aus einer ersten Anzahl der dem jeweiligen Primärinstruktionswort 5 vorausgehenden Primärinstruktionswörtern 5. Die zweite Gruppe 12 besteht aus einer zweiten Anzahl von Sekundärinstruktionswörtern 9, die mindestens gleich der ersten Anzahl ist, wobei jedes Sekundärinstruktionswort 9 vor der Erzeugung des nächstfolgenden Sekundärinstruktionswortes 9.1 der zweiten Gruppe 12 als letztes hinzugefügt werden kann. Das über die zweite Anzahl hinausgehende zuerst hinzugefügte Sekundärinstruktionswort 9 wird aus der zweiten Gruppe 12 entfernt.

### Bezugszeichenliste

- 1: Funktionseinheit
- 2: Prozessor
- 3: Programmcode
- 4: Übersetzung
- 5: Primärinstruktionswort
- 6: Instruktionswortteil
- 7: Programmwort
- 8: Programmspeicher
- 9: Sekundärinstruktionswort
- 9.1: Sekundärinstruktionswort
- 10: erstes Kennzeichen
- 11: erste Gruppe
- 12: zweite Gruppe
- 13: zweites Kennzeichen
- 14: Speicher
- 15: Instruktionswortspeicher
- 16: Instruktionswortpuffer

## Patentansprüche

1. Verfahren zur Ansteuerung von Funktionseinheiten in einem Prozessor, bei dem in einer Konfiguration eine aus einer Übersetzung eines Programmcodes (3) stammende Folge von Primärinstruktionsworten (5) aus mehreren Instruktionswortteilen (6) komprimiert und als Folge von zugehörigen Programmworten (7) gespeichert wird und bei dem in einer nachfolgenden Ausführungsphase aus der Folge von Programmworten (7) aufeinanderfolgende Sekundärinstruktionsworte (9) aus mehreren Instruktionswortteilen (6) in der zur Ansteuerung aller Funktionseinheiten (1) benötigten vollen Instruktionswortbreite erzeugt werden, **dadurch gekennzeichnet,**
**dass** im Ergebnis der Konfiguration ein Programmwort (7) ein erstes Kennzeichen (10) eines Primärinstruktionswortes (5) aus einer ersten Gruppe (11) vorhergehender Primärinstruktionsworte (5), welches mit dem zum Programmwort (7) zugehörigen Primärinstruktionswort (5) die größte Übereinstimmung aufweist, und Instruktionswortteile (6), die das zu dem Programmwort (7) gehörige Primärinstruktionswort (5) von dem zu dem ersten Kennzeichen (10) gehörigen Primärinstruktionswort (5) unterscheidenden, enthält,
**dass** in der Ausführungsphase eine der ersten Gruppe (11) in der Anzahl entsprechende zweite Gruppe (12) von Sekundärinstruktionsworten (9) mit je einem zweiten Kennzeichen (13) versehen gespeichert wird, und
**dass** mittels dem in dem Programmwort (7) enthaltenen ersten Kennzeichen (10) ein dem zugehörigen Primärinstruktionswort (5) entsprechendes Sekundärinstruktionswort (9) aus der zweiten Gruppe (12) über das zugehörige zweite Kennzeichen (13) ermittelt wird und das dem Programmwort (7) entsprechende Sekundärinstruktionswort (9.1) erzeugt wird, indem in dem Sekundärinstruktionswort (9) aus der zweiten Gruppe (12) die in dem Programmwort (7) enthaltenen Instruktionswortteile (6) ausgetauscht werden.

2. Verfahren nach Anspruch 1, **dadurch gekenn- zeichnet, dass** die erste Gruppe (11) aus einer ersten Anzahl der dem jeweiligen Primärinstruktionswort (5) direkt vorausgehenden Primärinstruktionswörtern (5) besteht und
dass die zweite Gruppe (12) aus einer zweiten Anzahl von Sekundärinstruktionswörtern (9) besteht, die mindestens gleich der ersten Anzahl ist, wobei jedes Sekundärinstruktionswort (9.1) vor der Erzeugung des nächstfolgenden Sekundärinstruktionswortes (9.1) der zweiten Gruppe (12) als letztes hinzugefügt und das über die zweite Anzahl hinausgehende zuerst hinzugefügte Sekundärinstruktionswort (9) aus der zweiten Gruppe (12) entfernt wird.

3. Verfahren nach Anspruch 1, **dadurch gekennzeichnet, dass** das neu erzeugte Sekundärinstruktionswort (9.1) der zweiten Gruppe (12) hinzugefügt wird, indem dieses anstelle des seiner Erzeugung dienenden Sekundärinstruktionswortes (9) gespeichert wird.

4. Verfahren nach Anspruch 1, **dadurch gekenn**- **zeichnet, dass** ein dem Programmwort (7) entsprechendes neu erzeugtes Sekundärinstruktionswort (9.1) nach seiner Erzeugung nicht gespeichert wird.

5. Verfahren nach einem der Ansprüche 1 bis 4, **dadurch gekennzeichnet, dass** das erste Kennzeichen (10) als Abstand des zum jeweiligen Programmwort gehörigen Primärinstruktionswortes zu dem Primärinstruktionswort mit der größten Übereinstimmung gebildet wird.

6. Verfahren nach einem der Ansprüche 1 bis 5, **dadurch gekennzeichnet, dass** das zweite Kennzeichen (13) aus einer dem ersten Kennzeichen entsprechenden Adresse eines vorhergehenden Sekundärinstruktionswortes in einem der Abspeicherung der zweiten Gruppe (12) dienenden Speichers (14) besteht.

7. Verfahren nach einem der Ansprüche 1 bis 6, **dadurch gekennzeichnet, dass** das Programmwort (7) aus einer Anzahl von Instruktionswortteilen (6) besteht, die der innerhalb der Konfiguration am häufigsten auftretenden Anzahl zu unterscheidender Instruktionswortteile (6) entspricht und dass zur Zusammensetzung von Sekundärinstruktionsworten (9.1), die zu dem der Erzeugung dienenden Sekundärinstruktionswort (9) mehr als die in einem Programmwort (7) abgelegte Anzahl von Instruktionswortteilen (6) benötigt, mehrere Programmwörter (7) verwendet werden.

8. Verfahren nach einem der Ansprüche 1 bis 7, **dadurch gekennzeichnet, dass** die Instruktionswortteile (6) in einem Programmwort (7) komprimiert werden, indem die Bitbreite in dem Maße verringert wird, wie eine Darstellung der am häufigsten vorkommenden Instruktionswortteile (6) möglich ist, und dass bei einem Auftreten von Instruktionswortteilen (6), die zur Darstellung eine größere Bitbreite benötigen, mehrere Programmwörter (7) verwendet werden.

9. Verfahren nach Anspruch 8, **dadurch gekennzeichnet, dass** die Breite der Instruktionswortteile (6) in dem Programmwort (7) halbiert wird und zur Darstellung der Instruktionswortteile (6) ein oder zwei Programmwörter (7) vorgesehen sind.

10. Prozessoranordnung zur Durchführung des Verfahrens mit einem Programmspeicher (8) zur Speicherung von Programmworten (7), Funktionseinheiten (1), einem diesen Funktionseinheiten (1) zugeordneten Instruktionswortspeicher (15) zur Speicherung eines auf den Funktionseinheiten abzuarbeitenden Sekundärinstruktionswortes (9.1), einem Instruktionswortpuffer (16), der aus einem mittels dem in dem Programmwort (7) enthaltenen ersten kennzeichen (10) zeilenweise adressierbaren Speicher (14) besteht, zur Speicherung bereits erzeugter Sekundärinstruktionsworte (9) mit einer Breite, die mindestens gleich der Bitbreite des Sekundärinstruktionswortes (9) ist und mit Mitteln zur Erzeugung eines abzuarbeitenden Sekundärinstruktionswortes (9.1) aus einem oder mehreren Programmworten (7) und einem in dem Instruktionswortpuffer gespeicherten Sekundärinstruktionswort (9).

## Claims

1. Method for driving function units in a processor, in which, during a configuration operation, a sequence - which comes from a translation of a program code (3) - of primary instruction words (5) comprising a plurality of instruction word parts (6) is compressed and is stored as a sequence of associated program words (7), and in which, during a subsequent execution phase, successive secondary instruction words (9) comprising a plurality of instruction word parts (6) are generated from the sequence of program words (7) in the full instruction word length needed to drive all of the function units (1), **characterized in that**,
as a result of the configuration operation, a program word (7) contains a first identifier (10) for a primary instruction word (5) from a first group (11) of preceding primary instruction words (5), said primary instruction word having the greatest match with the primary instruction word (5) that is associated with the program word (7), and instruction word parts (6) which distinguish the primary instruction word (5) that is associated with the program word (7) from the primary instruction word (5) that is associated with the first identifier (10),
**in that**, during the execution phase, a second group (12) of secondary instruction words (9) which corresponds in number to the first group (11) is stored such that it is provided with a respective second identifier (13), and
**in that** the first identifier (10) which is contained in the program word (7) is used to determine a secondary instruction word (9) - which corresponds to the associated primary instruction word (5) - from the second group (12) using the associated second identifier (13), and the secondary instruction word (9.1) which corresponds to the program word (7) is generated by interchanging the instruction word parts (6) contained in the program word (7) in the secondary instruction word (9) from the second group (12).

2. Method according to Claim 1, **characterized in that** the first group (11) comprises a first number of primary instruction words (5) which directly precede the respective primary instruction word (5), and
**in that** the second group (12) comprises a second number of secondary instruction words (9) which is at least equal to the first number, each secondary instruction word (9.1) being added to the second group (12) last before the next secondary instruction word (9.1) is generated, and the secondary instruction word (9) which was added first and exceeds the second number being removed from the second group (12).

3. Method according to Claim 1, **characterized in that** the newly generated secondary instruction word (9.1) is added to the second group (12) by being stored instead of the secondary instruction word (9) which was used to generate it.

4. Method according to Claim 1, **characterized in that** a newly generated secondary instruction word (9.1) which corresponds to the program word (7) is not stored after it has been generated.

5. Method according to one of Claims 1 to 4, **characterized in that** the first identifier (10) is formed as the distance between the primary instruction word associated with the respective program word and the primary instruction word with the greatest match.

6. Method according to one of Claims 1 to 5, **characterized in that** the second identifier (13) comprises an address (which corresponds to the first identifier) of a preceding secondary instruction word in a memory (14) which is used to store the second group (12).

7. Method according to one of Claims 1 to 6, **characterized in that** the program word (7) comprises a number of instruction word parts (6) which corresponds to the number (which occurs most often during the configuration operation) of instruction word parts (6) which are to be distinguished, and **in that** a plurality of program words (7) are used to compose secondary instruction words (9.1), this operation requiring, in addition to the secondary instruction word (9) which is used for generation purposes, more than the number of instruction word parts (6) stored in a program word (7).

8. Method according to one of Claims 1 to 7, **characterized in that** the instruction word parts (6) in a program word (7) are compressed by reducing the bit length to such an extent that it is possible to represent the instruction word parts (6) which occur most often, and **in that**, when instruction word parts (6) which require a longer bit length for the purpose of representation occur, a plurality of program words (7) are used.

9. Method according to Claim 8, **characterized in that** the length of the instruction word parts (6) in the program word (7) is halved, and one or two program words (7) are provided for the purpose of representing the instruction word parts (6).

10. Processor arrangement for carrying out the method, said arrangement having a program memory (8) for storing program words (7), function units (1), an instruction word memory (15) which is assigned to these function units (1) and is intended to store a secondary instruction word (9.1) that is to be processed in the function units, an instruction word buffer (16) which comprises a memory (14) - which can be addressed row by row using the first identifier (10) contained in the program word (7)
- and is intended to store secondary instruction words (9) - which have already been generated - with a length which is at least equal to the bit length of the secondary instruction word (9), and having means for generating a secondary instruction word (9.1) - which is to be processed
- from one or more program words (7) and a secondary instruction word (9) which is stored in the instruction word buffer.

## Revendications

1. Procédé de commande d'unités fonctionnelles dans un processeur, selon lequel dans une configuration, une succession de mots d'instruction primaires (5) comprenant plusieurs parties de mot d'instruction (6) issue d'une traduction d'un code de programme (3) est comprimée et mémorisée comme succession de mots de programme (7) associés, et dans une phase d'exécution suivante, à partir de la succession de mots de programme (7) on génère des mots d'instruction secondaires (9) successifs comprenant plusieurs parties de mot d'instruction (6) dans la largeur de mot d'instruction entière nécessaire pour la commande de toutes les unités fonctionnelles (1),
**caractérisé en ce que**
par configuration, un mot de programme (7) contient une première identification (10) d'un mot d'instruction primaire (5) d'un premier groupe (11) de mots d'instruction primaires (5) précédents qui présente la plus grande concordance avec le mot d'instruction primaire (5) associé au mot de programme (7), et des parties de mot d'instruction (5) qui distinguent le mot d'instruction primaire (5) associé au mot de programme (7) du mot d'instruction primaire (5) associé à la première identification (10),
dans la phase d'exécution, on mémorise un deuxième groupe (12) de mots d'instruction secondaires (9) d'un nombre identique à celui du premier groupe (11) avec respectivement une deuxième identification (13), et
au moyen de la première identification (10) contenue dans le mot de programme (7), on détermine un mot d'instruction secondaire (9) du deuxième groupe (12) correspondant au mot d'instruction primaire (5) associé, à l'aide de la deuxième identification (13) associée, et on génère le mot d'instruction secondaire (9.1) correspondant au mot de programme (7) en échangeant dans le mot d'instruction secondaire (9) du deuxième groupe (12), les parties de mot d'instruction (6) contenues dans le mot de programme (7).

2. Procédé selon la revendication 1,
**caractérisé en ce que**
le premier groupe (11) est composé d'un premier nombre des mots d'instruction primaires (5) précédant directement le mot d'instruction primaire (5) respectif, et le deuxième groupe (12) est composé d'un deuxième nombre de mots d'instruction secondaires (9), qui est au moins égal au premier nombre, et chaque mot d'instruction secondaire (9.1), avant la génération du mot d'instruction secondaire (9.1) suivant, est ajouté au deuxième groupe (12) en dernier, alors que le mot d'instruction secondaire (9) ajouté en premier et dépassant le deuxième nombre est supprimé du deuxième groupe (12).

3. Procédé selon la revendication 1,
**caractérisé en ce que**
le nouveau mot d'instruction secondaire (9.1) généré est ajouté au deuxième groupe (12) en le mémorisant à la place du mot d'instruction secondaire (9) servant à sa génération.

4. Procédé selon la revendication 1,
**caractérisé en ce qu'**
un nouveau mot d'instruction secondaire (9.1) généré correspondant au mot de programme (7) n'est pas mémorisé après sa génération.

5. Procédé selon l'une quelconque des revendications 1 à 4,
**caractérisé en ce que**
la première identification (10) est formée comme distance entre le mot d'instruction primaire associé au mot de programme respectif et le mot d'instruction primaire avec la plus grande concordance.

6. Procédé selon l'une quelconque des revendications 1 à 5,
**caractérisé en ce que**
la deuxième identification (13) est composée d'une adresse d'un mot d'instruction secondaire précédent, correspondant à la première identification, dans une mémoire (14) servant à mémoriser le deuxième groupe (12).

7. Procédé selon l'une quelconque des revendications 1 à 6,
**caractérisé en ce que**
le mot de programme (7) est composé d'un nombre de parties de mot d'instruction (6) qui correspond au nombre de parties de mot d'instruction (6) apparaissant le plus souvent à l'intérieur de la configuration, et pour la composition de mots d'instruction secondaires (9.1), qui nécessite davantage que le nombre de parties de mot d'instruction (6) stocké dans un mot de programme (7) pour le mot d'instruction secondaire (9) servant à la génération, on utilise plusieurs mots de programme (7).

8. Procédé selon l'une quelconque des revendications 1 à 7,
**caractérisé en ce que**
les parties de mot d'instruction (6) sont comprimées en un mot de programme (7) en réduisant d'autant la largeur de bit qu'une représentation des parties de mot d'instruction apparaissant le plus souvent est possible, et lors d'une apparition de parties de mot d'instruction (6), qui nécessitent une largeur de bit plus importante pour la représentation, on utilise plusieurs mots de programme (7).

9. Procédé selon la revendication 8,
**caractérisé en ce qu'**
on divise par deux la largeur des parties de mot d'instruction (6) dans le mot de programme (7), et on prévoit pour la représentation des parties de mot d'instruction (6) un ou deux mots de programme (7).

10. Processeur pour la mise en oeuvre du procédé, comprenant une mémoire de programme (8) pour mémoriser des mots de programme (7), des unités fonctionnelles (1), une mémoire (15) de mots d'instruction associée à ces unités fonctionnelles (1) pour mémoriser un mot d'instruction secondaire (9.1) à traiter sur les unités fonctionnelles, une mémoire tampon de mots d'instruction (16), qui est composée d'une mémoire (14) pouvant être adressée par lignes au moyen de la première identification (10) contenue dans le mot de programme (7), pour mémoriser des mots d'instruction secondaires (9) avec une largeur qui est au moins égale à la largeur de bit du mot d'instruction secondaire (9), et des moyens pour générer un mot d'instruction secondaire (9.1) à traiter comprenant un ou plusieurs mots de programme (7) et un mot d'instruction secondaire (9) mémorisé dans la mémoire tampon de mots d'instruction.
